# EUROPEAN PATENT SPECIFICATION

(11) **EP 3 502 430 B1**
(45) Date of publication and mention of the grant of the patent: **17.02.2021**
(21) Application number: 18215680.2
(22) Date of filing: 21.12.2018
(51) Int. Cl.: F01N 3/08, F01N 3/20, F01N 13/00

(54) **METHOD OF DETERMINING NOX AND NH3 OUTPUT FROM A LEAN NOX TRAP (LNT)**
VERFAHREN ZUM BESTIMMEN DER NOX- UND NH3-AUSGABE AUS EINER MAGEREN NOX-FALLE
PROCÉDÉ DE DÉTERMINATION DE LA PRODUCTION DE NOX ET DE NH3 À PARTIR D'UN PIÈGE À NOX (LNT)

(30) Priority: 21.12.2017 GB 201721538
(43) Date of publication of application: 26.06.2019
(73) Proprietor: Delphi Automotive Systems Luxembourg SA, 4940 Bascharage (LU)
(72) Inventor: PARMENTIER, Michael, 6747 CHATILLON (BE); SCHMITT, Julien, 57970 KUNTZIG (FR)
(74) Representative: Delphi France SAS

(56) References cited:
- EP-A1- 3 037 636
- DE-A1-102015 117 530
- DE-A1-102016 209 360
- GB-A- 2 527 443

## Description

### TECHNICAL FIELD

This invention relates to a method of determining NOx and ammonia (NH3) levels output from a Lean NOx trap in a vehicle exhaust systems. In particular the invention relates to such a determination from raw data from a sensor downstream of the LNT, whose output is responsive to both NOx and NH3 levels. Example allow better control with respect to which increasing the conversion of NOx in vehicle exhaust systems.

### BACKGROUND OF THE INVENTION

Recent diesel emissions limits require increased NOx conversion efficiency in vehicle exhaust systems, under a large range of operating conditions, and future emissions are likely to require even further efficiencies.

Current vehicle exhaust systems usually include a Lean NOx trap (LNT) located upstream of a Selective Catalytic Unit (SCR). Typical of these systems, a reductant fluid such as urea is injected into the exhaust upstream of the SCR where it is turned into ammonia for NOx conversion. Often a Diesel Particulate Filter (DPF) is located in the exhaust system also often between the LNT and the SCR. In other systems, SCR functionality is incorporated into the DPF/soot filter and is referred to as SCRoF.

In terms of after treatment, combining the performance of Lean NOx Trap (LNT) and Selective Catalytic Reduction (SCR) has merit in becoming the standard solution especially for diesel light duty vehicles meeting Euro6d. So one of the optimum systems are thus a LNT as well as a Diesel Particulate Filter (DPF) and SCR architecture or alternatively LNT with SCRoF (SCR on Filter) and SCR. With such architectures, the control of the SCR catalyst and urea injection requires an accurate knowledge of the NOx concentration entering the SCR. These architectures are then often equipped with a post-LNT NOx sensor.

The SCR control adjusts the urea dosing to produce the adequate amount of NH3 for the SCR reaction, but some NH3 is also produced by the LNT during LNT-regeneration phases (λ<1 rich gases).

During LNT regenerations, some NOx may also be released from the LNT and not converted. The LNT-out (or DPF-out) NOx sensor signal is then a combination of NOx and NH3, since the NOx sensor is also sensitive by design to NH3.

In prior art, the NOx sensor is used as is for calculating how much NOx enters the downstream SCR, but this leads to errors in the calculation of urea to dose and/or SCR closed-loop and/or SCR OBD. Using the raw NOx sensor signal without correction then leads to overloading the SCR with NH3 (compared to the desired loading). This overloading can lead to NH3 slip at the tailpipe. In Europe, NH3 slip has to be monitored for Euro 6d. This may be a first step to limit the NH3 slip on light-duty vehicles as for heavy-duty trucks already today. In addition, OEMs always have a NH3 slip limit to avoid the bad NH3 smell behind their vehicles.

A model of the NH3 produced during the LNT regeneration can be used to compensate the NH3 under-estimation. But this does not account for catalyst aging and still does not cover the overdosing resulting from the overestimated SCR-in NOx. Patent Application EP 3037636 describes diagnosis methodology for an SCR system; DE102016209360 describes a method of using a NOx sensor in a vehicle exhaust and DE 101015117530 describes a method of monitoring NOx concentration.

It is an object of the invention to overcome these problems.

### SUMMARY OF THE INVENTION

In one aspect is provided A method of determining the level of NOx and/or NH3 levels exiting a Lean NOx Trap (LNT) in a vehicle exhaust system during regeneration of the LNT, said exhaust system including a sensor located downstream of the LNT and being responsive to both NOx and NH3 and adapted to give an output signal indicative of the level of both NH3 and NOx, comprising the steps of: measuring the sensor output, and characterized in:
a) determining the NOx output to be the level indicated by the sensor, and/or the NH3 output to be zero during a first period subsequent to regeneration being started;
b) providing a model or estimate of the NOx entering the LNT, and thus determining a component comprising the amount of unconverted NOx slip and determining a first time point subsequent to regeneration being started and subsequent to the first period, where i) the NOx output is determined to said component comprising the amount of unconverted NOx slip, and/or ii) the NH3 output to be the level indicated by the sensor minus said component;
c) determining a second time point, whereafter the NOx output is determined to be the level indicated by the sensor, and/or the NH3 output is determined to be zero wherein in step c) the second time point is determined by monitoring and accumulating the exhaust flow subsequent to said first time point, said second time point being the time point when the accumulated exhaust flow reaches a predetermined threshold.

The method may include determining the levels of NOx stored on the LNT, and where said first time point is estimated based on the peak, or maximum level of NOx stored in the LNT subsequent to said regeneration phase or the level of NOx stored in the LNT at the start of the regeneration phase.

Said level of NOx stored on the LNT may be determined by a model.

The method may include determining the accumulated level of unburnt fuel provided to the LNT subsequent to the regeneration phase and determining the first time point as the time when said accumulated level reaches a threshold.

The threshold may be based on determined level of NOx stored on the LNT at said first time point.

Said threshold may be determined from a pre-stored relationship relating the peak, or maximum level of NOx stored in the LNT subsequent to said regeneration phase or the level of NOx stored in the LNT at the start of the regeneration phase, against accumulated fuel value.

The method may include:
i) monitoring the exhaust flow and determining a measure of the accumulated exhaust flow subsequent to the first time point.
ii) comparing the accumulated exhaust flow with a threshold;
iii) determining said second time point to be time when said accumulated exhaust flow reaches said threshold.

The exhaust flow may be determined from a model.

Said unconverted NOx slip to the LNT may be provided by a model.

### BRIEF DESCRIPTION OF THE DRAWINGS

The present invention is now described by way of example with reference to the accompanying drawings in which:
- Figure 1 shows a schematic representation of a portion of an exhaust system;
- Fig. 2 shows a timeline of the output of the NOx sensor signal, as well as the NOx and NH3 concentrations output from the LNT,
- Figure 3 shows a chart similar to figure 2) showing NOx release peak "duration" ;
- Fig. 4 shows a calibration curve relating prestored NOx level at a particular time point to a required rich fuel threshold;
- Figure 5 to 7 shows several examples showing the sensor output signal the actual NH3 and NOx values downstream of the LNT and the calculated values of NOx and NH3 according to examples under different operating conditions during regeneration cycles;
- Fig. 8 shows a flow chart of one example.

### DESCRIPTION OF THE PREFERRED EMBODIMENTS

### Prior Art

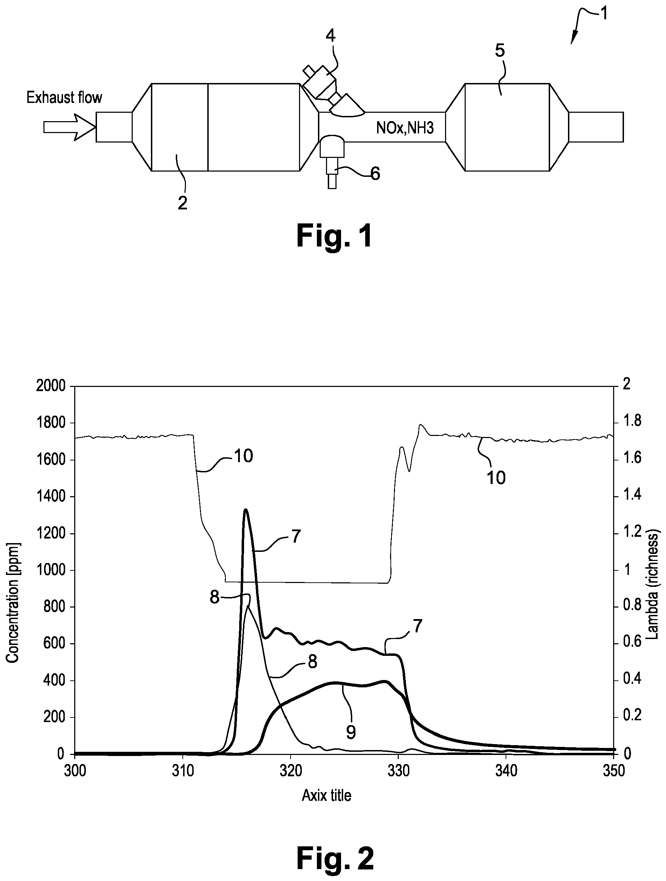

Figure 1 shows a schematic representation of a portion of an exhaust system 1 which includes a LNT 2 located upstream of a DPF. LNT catalysts are used for NOx removal. In the LNT reaction NOₓ is stored under lean conditions and then reduced by H₂ or CO or hydrocarbons to N₂ during a short rich period.

Downstream of the DPF is located a urea doser 4, adapted to inject into the exhaust where is converted by elevated temperature to ammonia. An SCR catalyst unit 5 converts the NOx gases using the ammonia. With such architectures, the control of the SCR catalyst and urea injection requires an accurate knowledge of the NOx concentration entering the SCR. These architectures are then often equipped with a post-LNT NOx sensor 6, often referred to as a SCR-in NOX sensor.

The SCR control adjusts the urea dosing to produce the adequate amount of NH3 for the SCR reaction, but some NH3 is also produced by the LNT during LNT-regeneration phases (λ<1 rich gases).

During LNT regenerations, some NOx may also be released from the LNT and not converted. The LNT-out (or DPF-out) NOx sensor signal is then a combination of NOx and NH3, since the NOx sensor is also sensitive by design to NH3.

Fig. 2 shows a timeline of the output of the NOx sensor signal 7, as well as the NOx and NH3 concentrations output from the LNT, designated with reference numbers 8 and 9 respectively, and as can be seen sensor signal 7 is a combination of NOx and NH3 reading.

The timeline shows the regeneration phase of the LNT, and shows the engine operating conditions by virtue of the value of λ (richness/lean), designated by reference numeral 10. For LNT regeneration, when switched to rich operating conditions for the engine the oxygen and λ values fall and both the NOx output and the NH3 output increases. NH3 actually increases only after a certain time. If the LNT regeneration is very short, no NH3 is produced In prior art, the NOx sensor is used as is for calculating how much NOx enters the (downstream SCR), but this leads to errors in the calculation of urea to dose and/or SCR closed-loop and/or SCR OBD control. The output from the sensor-based NOx will be greater than the real NOx (due to the fact that there is output of NH3 which the sensor registers) which in the control of the doser based thereupon, leads to overdosing of NH3 and hence NH3 over-loading of SCR. So the NH3 produced during LNT regen is not taken into account which leads to NH3 over-loading of SCR. Using the raw NOx sensor signal without correction then leads to overloading the SCR with NH3 (compared to the desired loading). This overloading can lead to NH3 slip at the tailpipe. In Europe, NH3 slip has to be monitored for Euro 6d.

### Invention

As mentioned the sensor cannot distinguish between NOx and NH3. In an example which is not part of the present invention but is helpful in understanding, subsequent to regeneration being started, it is assumed that the output signal of the sensor is as a result of only NOx, until a certain time point is reached, where after the output signal from the sensor is assume to be due to NH3 only, at least until after the regeneration , or until a certain time point is reached. This is because subsequent to regeneration initially mostly it is NOx that is released until a time when mostly NH3 is released.

Further details of when the time point is reached whereafter it is assumed the sensor signal output is due to NH3 will be described.

Examples aims to use the raw NOx sensor signal in rich mode to extract the NOx and NH3 information which can then further be used by other controls such as the SCR control.

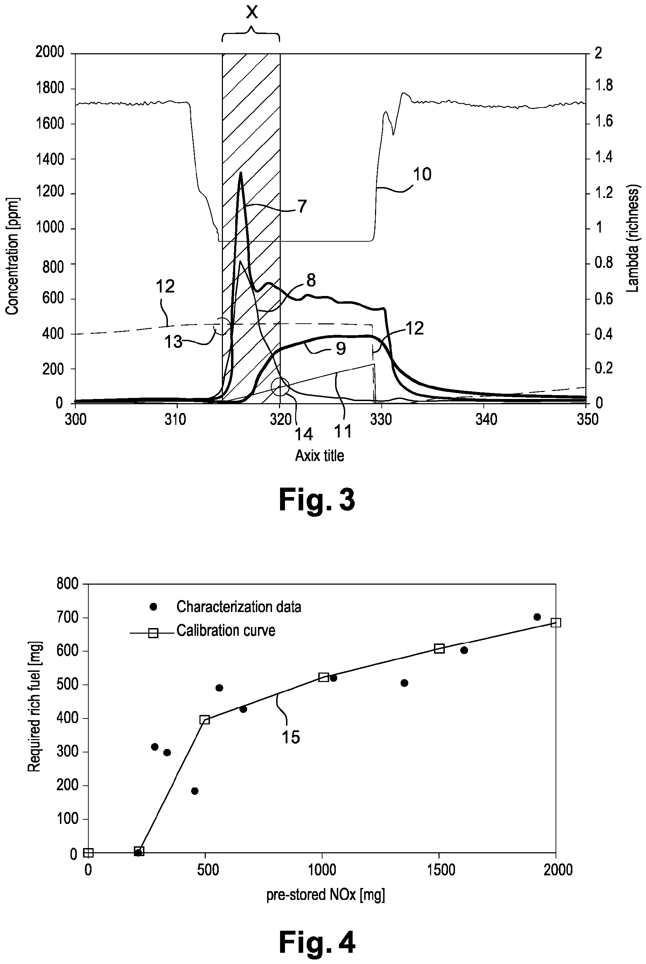

Figure 3 shows a chart similar to figure 2 with like reference numerals. Data acquired in several driving conditions (similar to Fig.2) show that the NOx release peak "duration" is shown by the shaded area X. This area spans from point 13 on the figure to the point 14. The duration of this area, or the time point 14, is linked to the amount of NOx stored in the LNT prior to the rich conditions (for LNT regeneration) and also linked to the cumulated amount of reductants provided to the LNT.

Reference numeral 11 shows the accumulated (rich) fuel; this is effectively "integrated" rich fuel, it is not physically accumulated but calculated along time to determine a measure of how much total reductants (rich fuel) has been provided to the LNT and reference numeral 12 represents the NOx stored in the LNT (e.g. during lean operation,) the latter of which drops rapidly after the LNT regeneration phase.

As can be seen subsequent to start of regeneration, until the point 14, most of the output registered by the sensor is NOx and so in one example, methodology assumes that the sensor output subsequent to regeneration is NOx only until time point 14, i, e., it is assumed that subsequent to regeneration all of the sensor is due to NOx until time point 14.

Thereafter the bulk of the sensor output is due to NH3 so in one example after time point 14, it is assumed in one example that the output from the sensor is due to NH3, at least for a subsequent time period such as the remainder of the regeneration period or when a further time point is reached. In other words after point 14, we assume that no NOx is released, so that the sensor signal is all or mostly NH3, wherein the consideration of only assuming the sensor signal to be NH3 is not part of the present invention.

Since the LNT is not 100% efficient in examples it may be considered that some of the sensor signal is unconverted NOx in the LNT (NOx that comes-in but not fully converted). Since a basic model of this efficiency can be provided for this and it is known how much NOx comes in the LNT, it can then be calculated how much NOx is not converted as shown in box S8 on the flow chart. This can then be substracted this from the sensor signal to calculate the NH3. Example: LNT-in = 100ppm, modeled eff=90%, NOx sensor = 68ppm. We calculate 10ppm LNT-out NOx and say that there is then 68-10 = 58ppm NH3 at the sensor

In summary therefore, from the start of the regeneration phase or from time point 13, until time point 14, the sensor signal is assumed due to NOx only.

The shaded area starts when excess/rich fuel starts to accumulate, basically when the LNT regeneration starts.

### Determination of Time point 14.

In examples, the amount of NOx stored in the LNT is continuously calculated. This may be determined by suitable modelling. Such methods and models for determining stored NOx are already present in many modern engine systems. The model may be adapted for LNT aging.

At the start of the LNT regeneration phase (rich), the amount of NOx stored can thus be determined from such models; the start of the regeneration may be considered to be point 13, or indeed when the engine/exhaust control starts the regeneration. As can be seen, preceding the regeneration, the stored NOx increases and reaches a peak value at point 13 until regeneration starts, thereafter the value of NOx stored plateaus before dropping after the regeneration phase. The real NOx stored in the LNT will decrease, but since only the accumulated NOx is needed at the start of the regeneration, we stop calculating the accumulated NOx, so it looks like it plateaus, but it is simply not calculated anymore

When switching to rich operation to start the regeneration, the amount of available reductants (mainly HC, CO) can be determined e.g. calculated based on the amount of fuel below stoichiometry (rich fuel). This "rich fuel" level can be determined by the accumulated level of reductants/fuel (i.e. integrated) during the LNT regeneration as described e.g. from measurement of the lambda sensor and/or other operating conditions.

Until point 14, while the accumulated rich fuel is lower than a threshold, the NOx sensor signal is considered to represent purely the NOx release phenomenon (a NOx "puff'). When the threshold is reached at point 14, the sensor signal is assumed to be only NH3 output, plus in refined examples NH3 any unconverted NOx as shown on box S8 on the flow chart. Thus in order to determine the time point 14 the threshold need to be determined and the amount of available reductants (richness) determined with time; so in other words to determine the time point 14, the accumulated rich fuel and the threshold need to be determined. The threshold is a function of the pre-stored NOx in the LNT.

So the threshold is dependent on the peak pre-stored NOx on the LNT (e.g. at time point 13). Thus the threshold may be calibrated as in a table and described with reference to figure (see Fig. 4) which shows a curve 15 of prestored NOx level at time point 13 to the required rich fuel threshold. Thus the accumulated rich fuel is continuously determined and when it reaches a threshold value (dependent on the NOx stored at point 13), point 14 is reached. When going rich, the amount of available reductants (mainly HC, CO) is calculated based on the amount of fuel below stoichiometry (rich fuel). Thus in examples this "rich fuel" is determined by accumulation (integrated) during the LNT regeneration period 11.

Once point 14 is reached (when the accumulated rich fuel exceeds the calibrated threshold), in order to determine the time the phase last in which it is assumed the output sensor is due to NH3 only (or NH3 only plus some NOx slip) in one method, the exhaust flow is measured or estimated and accumulated. Until this accumulated exhaust flow not reaches a threshold, we stay in the phase where the sensor is assumed to measure only NH3 (and in refined embodiments unconverted NOx also). When the accumulated exhaust reaches a threshold, the methodology assumes the sensor output is entirely due to NOx.

### Refined Example

As mentioned in a simple example which is not part of the present invention, after point 14 is reached, it is assumed that the sensor signal is as a result of NH3 until a further time point (e.g. after the regeneration).

In an embodiment, after point 14, is reached it is assumed the sensor signal is NH3 minus unconverted slip (NOx) component i.e. equal to the NOx entering the LNT a model or estimate of the NOx entering the LNT needs to be provided. So the sensor signal is considered to represent NH3 plus the continuous unconverted NOx slip component.

Fig. 2 shows around 325s that the unconverted NOx is generally much lower than the NH3, so a simple model of the unconverted NOx can be sufficient to calculate the NH3 component of the signal, however this is not part of the present invention.

To account for a nonlinear response of the NOx sensor to NH3, an NH3 concentration correction curve may be applied to the processed signal.

The method thus provides a computation of the NOx and NH3 components of the raw NOx sensor signal.

In one example, 2. after point 14 is reached as mentioned most (minus the unconverted NOx slip level (NOx LNT in) from a model of the sensor output signals is assumed to be NH3. In one example the exhaust flow is monitored or estimated and the value accumulated (since regeneration start /point 14) is compared with an exhaust flow threshold. Once the threshold has been reached, the NH3 out is assumed to be zero.

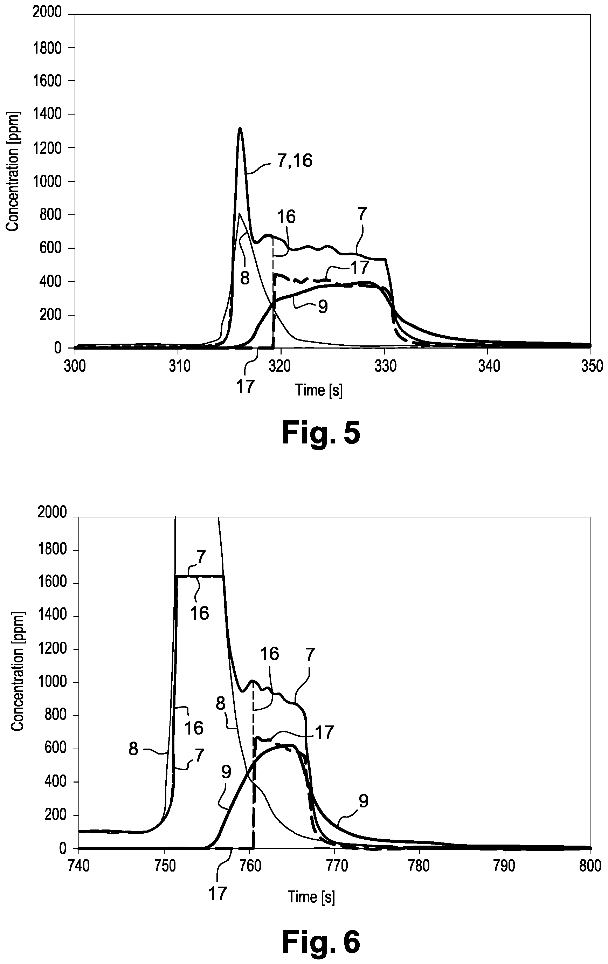

Figure 5 to 7 shows several examples showing the sensor output signal 7, the actual NH3 and NOx values downstream of the LNT (reference numeral 9 and 8 respectively), and the calculated values of NOx and NH3 (reference numerals 16 and 17) respectively, according to examples under different operating conditions during regeneration cycles. Point 14 is marked on the graphs. As can be seen after this point the NH3 value generally follows the sensor output, but in the examples is lower as the method includes assuming a constant NOx output from the LNT as a result of unconverted NOx constant LNT NOx in.

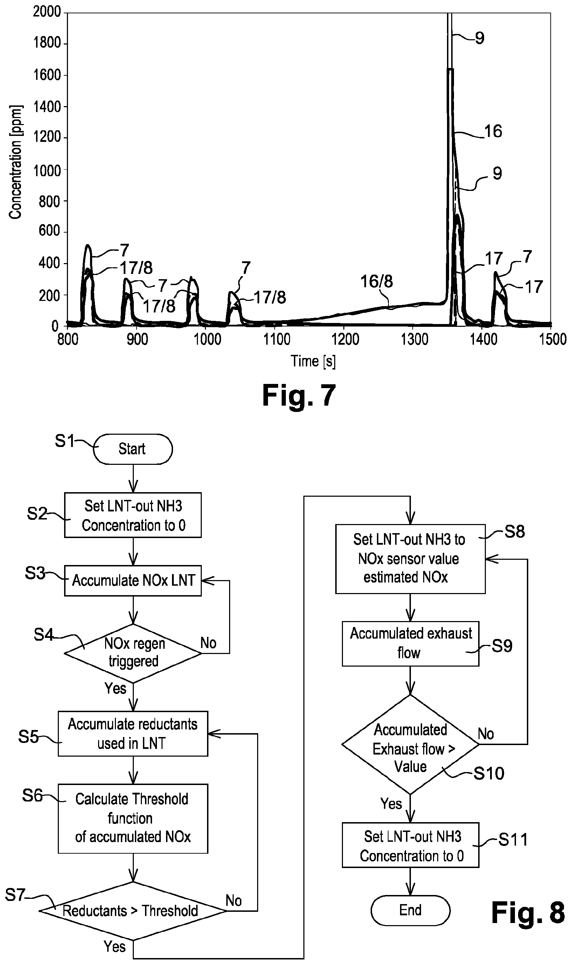

In one example the method and process algorithm is summarized in the flowchart from Fig. 8. The process starts at step S1. At step S2 the LNT out NH3 concentration is set to zero. Meaning it is assumed that the NH3 out from the LNT is zero and the sensor signal is as a result purely of NOx. At step S3 under operating conditions NOx is accumulated in the LNT. At step S4 it is determined if NOx regeneration is triggered. / If not the process of step S3 continues with NOx still accumulated in the LNT. If so at step S5 the reductants entering (used) in the LNT are determined and the amounts accumulated (integrated over time are calculated). At step S6 the threshold function (maximum/peak level of NOx stored in the LNT is determined). In step S7 it is determined if the level of reductants are above a threshold (point 14 is achieved) then at step S8 the NH3 value out from the LNT is determined as the sensor output (which is not part of the present invention), or this value has estimated NOx output subtracted from it (this may be the modelled NOx entering the LNT i.e. (LNT-in_NOx)modelled) which is part of the present invention

Thereafter at step S9 the exhaust flow is accumulated since point 14 (and when an exhaust flow accumulated threshold is determined to be reached at step S10, at step S11 the NH3 output from the LNT is assumed to be zero, meaning that thereafter the output for the sensor is assumed to be just NOx.

## Claims

1. A method of determining the level of NOx and/or NH3 levels exiting a Lean NOx Trap (LNT) (2) in a vehicle exhaust system (1) during regeneration of the LNT, said exhaust system including a sensor(6) located downstream of the LNT and being responsive to both NOx and NH3 and adapted to give an output signal (7) indicative of the level of both NH3 and NOx, comprising the steps of: measuring the sensor output, and
a) determining the NOx output to be the level indicated by the sensor, and/or the NH3 output to be zero during a first period subsequent to regeneration being started;
b) providing a model or estimate of the NOx entering the LNT, and thus determining a component comprising the amount of unconverted NOx slip and determining a first time point (14) subsequent to regeneration being started and subsequent to the first period, where i) the NOx output is determined to said component comprising the amount of unconverted NOx slip, and/or ii) the NH3 output to be the level indicated by the sensor minus said component;
c) determining a second time point, whereafter the NOx output is determined to be the level indicated by the sensor, and/or the NH3 output is determined to be zero wherein in step c) the second time point is determined by monitoring and accumulating the exhaust flow subsequent to said first time point, said second time point being the time point when the accumulated exhaust flow reaches a predetermined threshold.

2. The method as claimed in claim 1 including determining the levels of NOx stored on the LNT (2), and where said first time point (14 ) is estimated based on a peak, or a maximum level of NOx stored in the LNT subsequent to said regeneration phase or the level of NOx stored in the LNT at the start of the regeneration phase.

3. The method as claimed in claim 2 wherein said level of NOx stored on the LNT (2) is determined by a model.

4. The method as claimed in claim 1 to 3 including determining the accumulated level of unburnt fuel provided to the LNT (2) subsequent to the regeneration phase and determining the first time point (14 ) as the time when said accumulated level of unburnt fuel reaches a threshold.

5. The method as claimed in claims 1, 3 and 4 where the predetermined threshold is based on determined level of NOx stored on the LNT at said first time point.

6. The method as claimed in 5 where said predetermined threshold is determined from a pre-stored relationship relating the peak, or maximum level of NOx stored in the LNT subsequent to said regeneration phase or the level of NOx stored in the LNT at the start of the regeneration phase, against accumulated fuel value.

7. The method as claimed in claims 1 to 6 including
i) monitoring the exhaust flow and determining a measure of the accumulated exhaust flow subsequent to the first time point (14);
ii) comparing the accumulated exhaust flow with the predetermined threshold;
iii) determining said second time point to be time when said accumulated exhaust flow reaches said predetermined threshold.

8. The method as claimed in claim 7 wherein the exhaust flow is determined from a model.

9. The method as claimed in claim 1 wherein said unconverted NOx slip to the LNT is provided by a model.

## Patentansprüche

1. Verfahren zum Bestimmen des Pegels von NOx und/oder NH3 Pegeln, austretend aus einer Mager-NOx-Falle (LNT - Lean NOx Trap) (2) in einem Fahrzeugabgassystem (1) während einer Regeneration der LNT, wobei das Abgassystem einen Sensor (6) umfasst, der sich stromabwärts der LNT befindet und sowohl auf NOx als auch auf NH3 reagiert und ausgebildet ist, um ein Ausgangssignal (7) zu liefern, das den Pegel von sowohl NH3 als auch NOx angibt, die Schritte aufweisend: Messen des Sensorausgangs, und
a) Bestimmen, dass der NOx-Ausgang der von dem Sensor angegebene Pegel ist und/oder der NH3-Ausgang Null ist während einer ersten Periode nachfolgend auf einen Start der Regeneration;
b) Vorsehen eines Modells oder einer Schätzung von NOx, das in die LNT eintritt, und somit Bestimmen einer Komponente, die die Menge von nicht-umgewandeltem NOx-Schlupf aufweist, und Bestimmen eines ersten Zeitpunkts (14) nachfolgend auf den Start der Regeneration und nachfolgend auf die erste Periode,
wobei i) der NOx-Ausgang zu der Komponente, die die Menge von nicht-umgewandeltem NOx-Schlupf aufweist, bestimmt wird und/oder ii) der NH3-Ausgang der Pegel ist, der durch den Sensor angegeben wird minus der Komponente;
c) Bestimmen eines zweiten Zeitpunkts, nach dem der NOx-Ausgang als der Pegel bestimmt wird, der durch den Sensor angegeben wird, und/oder der NH3-Ausgang als Null bestimmt wird, wobei in Schritt c) der zweite Zeitpunkt durch Überwachen und Akkumulieren des Abgasstroms nachfolgend auf den ersten Zeitpunkt bestimmt wird, wobei der zweite Zeitpunkt der Zeitpunkt ist, an dem der akkumulierte Abgasstrom eine vorgegebene Schwelle erreicht.

2. Das Verfahren gemäß Anspruch 1, das ein Bestimmen der auf der LNT (2) gespeicherten NOx-Pegel umfasst und wobei der erste Zeitpunkt (14) geschätzt wird basierend auf einer Spitze oder einem maximalen NOx-Pegel, der nachfolgend auf die Regenerationsphase in der LNT gespeichert ist, oder dem NOx-Pegel, der zu Beginn der Regenerationsphase in der LNT gespeichert ist.

3. Das Verfahren gemäß Anspruch 2, wobei der in der LNT (2) gespeicherte NOx-Pegel durch ein Modell bestimmt wird.

4. Das Verfahren gemäß Anspruch 1 bis 3, das umfasst ein Bestimmen des akkumulierten Pegels von unverbranntem Kraftstoff, der an die LNT (2) nachfolgend auf die Regenerationsphase vorgesehen wird, und ein Bestimmen des ersten Zeitpunkts (14) als den Zeitpunkt, an dem der akkumulierte Pegel von unverbranntem Kraftstoff eine Schwelle erreicht.

5. Das Verfahren gemäß den Ansprüchen 1, 3 und 4, wobei die vorgegebene Schwelle auf dem bestimmten NOx-Pegel basiert, der an dem ersten Zeitpunkt in der LNT gespeichert ist.

6. Das Verfahren gemäß Anspruch 5, wobei die vorgegebene Schwelle aus einer vorgespeicherten Beziehung bestimmt wird, die die Spitze oder den maximalen NOx-Pegel, der nachfolgend auf die Regenerationsphase in der LNT gespeichert ist, oder den NOx-Pegel, der zu Beginn der Regenerationsphase in der LNT gespeichert ist, zu dem akkumulierten Kraftstoffwert in Beziehung setzt.

7. Das Verfahren gemäß den Ansprüchen 1 bis 6, das umfasst
i) Überwachen des Abgasstroms und Bestimmen eines Maßes des akkumulierten Abgasstroms nachfolgend auf den ersten Zeitpunkt (14);
ii) Vergleichen des akkumulierten Abgasstroms mit der vorgegebenen Schwelle;
iii) Bestimmen des zweiten Zeitpunkts als den Zeitpunkt, an dem der akkumulierte Abgasstrom die vorgegebene Schwelle erreicht.

8. Das Verfahren gemäß Anspruch 7, wobei der Abgasstrom aus einem Modell bestimmt wird.

9. Das Verfahren gemäß Anspruch 1, wobei der nicht-umgewandelte NOx-Schlupf zu der LNT durch ein Modell vorgesehen wird.

## Revendications

1. Procédé pour déterminer le niveau de NOx et/ou les niveaux de NH3 sortant d'un piège à NOx pauvre (Lean NOx Trap, LNT) (2) dans un système d'échappement d'un véhicule (1) pendant une régénération du LNT, ledit système d'échappement incluant un capteur (6) situé en aval du LNT et étant réactif à la fois aux NOx et aux NH3 et étant adapté pour donner un signal de sortie (7) indicateur du niveau à la fois de NH3 et de NOx, comprenant les étapes consistant à : mesurer la sortie du capteur et
a) déterminer la sortie de NOx comme étant le niveau indiqué par le capteur, et/ou la sortie de NH3 comme étant égale à zéro pendant une première période après que la régénération a démarré ;
b) fournir un modèle ou une estimation des NOx entrant dans le LNT, et par conséquent déterminer un composant comprenant la quantité de rejet de NOx non convertis et déterminer un premier instant (14) après que la régénération a démarré et après la première période,
où i) la sortie de NOx est déterminée pour que ledit composant comprenne la quantité de rejet de NOx non convertis, et/ou ii) la sortie de NH3 doit être le niveau indiqué par le capteur moins ledit composant ;
c) déterminer un second instant suite à quoi la sortie de NOx est déterminée comme étant le niveau indiqué par le capteur, et/ou la sortie de NH3 est déterminée come étant être égale à zéro, dans lequel, dans l'étape c), le second instant est déterminé en surveillant et en accumulant le flux d'échappement consécutivement audit premier instant, ledit second instant étant l'instant auquel le flux d'échappement accumulé atteint un seuil prédéterminé.

2. Procédé selon la revendication 1, incluant l'étape consistant à déterminer les niveaux de NOx stockés dans le LNT (2), et/ou ledit premier instant (14) est estimé sur la base d'une crête, ou d'un niveau maximum de NOx stockés dans le LNT consécutivement à ladite phase de régénération, ou du niveau de NOx stockés dans le LNT au début de la phase de régénération.

3. Procédé selon la revendication 2, dans lequel ledit niveau de NOx stockés sur le LNT (2) est déterminé par un modèle.

4. Procédé selon la revendication 1 à 3 incluant l'étape consistant à déterminer le niveau accumulé de carburant non brûlé fourni au LNT (2) consécutivement à la phase de régénération, et l'étape consistant à déterminer le premier instant (14) comme étant le moment où ledit niveau accumulé de carburant non brûlé atteint un seuil.

5. Procédé selon les revendications 1, 3 et 4, dans lequel le seuil prédéterminé est basé sur un niveau déterminé de NOx stockés sur le LNT audit premier instant.

6. Procédé selon la revendication 5, dans lequel le seuil prédéterminé est déterminé à partir d'une relation stockée au préalable entre la crête, ou un niveau maximum de NOx stockés dans le LNT consécutivement à ladite phase de régénération ou le niveau de NOx stockés dans le LNT au début de la phase de régénération, et une valeur de carburant accumulée.

7. Procédé selon la revendication 1 à 6, incluant les étapes consistant à :
i) surveiller le flux d'échappement et déterminer une mesure du flux d'échappement accumulé consécutivement au premier instant (14) ;
ii) comparer le flux d'échappement accumulé au seuil prédéterminé ;
iii) déterminer ledit second instant comme étant le moment où ledit flux d'échappement accumulé atteint ledit seuil prédéterminé.

8. Procédé selon la revendication 7, dans lequel le flux d'échappement est déterminé à partir d'un modèle.

9. Procédé selon la revendication 1, dans lequel ledit rejet de NOx non convertis jusqu'au LNT est fourni par un modèle.
